# EUROPEAN PATENT APPLICATION

(11) **EP 1 211 587 A1**
(43) Date of publication of application: **05.06.2002**
(21) Application number: 00126213.8
(22) Date of filing: 30.11.2000
(51) Int. Cl.: G06F 1/00, G06F 9/445

(54) **Distributing programming language code**

(71) Applicant: Pentap Technologies AG, 39100 Bozen (IT)
(72) Inventor: Lanthaler, Florian, 39012 Meran (IT)
(74) Representative: Dendorfer, Claus, Dr.

(57) **Abstract**

A method for distributing programming language code (26) comprises the steps of accessing the programming language code (26) in a code repository, providing additional information related to said programming language code (26), encoding said additional information, combining said programming language code (26) and the encoded additional information (28), sending (34) said combined programming language code and encoded additional information (26, 28) from a server system (10) to a client system (12), receiving (38) said encoded additional information (28) from said client system (12), and decoding said encoded additional information (28) received from said client system (12). A code package (24), a computer program product and a computer system comprise corresponding features.

## Description

The present invention concerns the field of electronic distribution of programming language code.

Especially in the area of programming for the World Wide Web, scripting languages have become very popular. A script is a program or sequence of instructions that is interpreted or carried out by another program (the script interpreter). In contrast thereto, a compiled program would be executed directly by a computer processor. Scripting languages generally allow an easier and faster coding process than the more structured compiled languages such as C and C++. This feature makes scripting languages very attractive for developing World Wide Web applications, in particular if database access operations are involved. Scripting languages are often used to handle forms input or other services for a World Wide Web site.

Well-known scripting languages for World Wide Web applications are, for example, Perl, PHP, JSP, VBScript and JavaScript. These languages are very popular with the developers, but there are arguments against the use of scripting languages from a business perspective. Most applications developed with scripting languages are distributed in source code form, making it difficult to protect the intellectual property of a company, to avoid modifications by third parties, and to embed confidential information in the scripting language code. Furthermore, it is much easier to tamper with scripting language code than with compiled machine language code (object code). It would be possible for a malicious or criminal person to modify scripting language code without the knowledge or consent of either the software producer or the customer.

Corresponding observations apply not only to the scripting languages mentioned above, but to any human-readable programming language code that is distributed to the end-user. This includes the source code of all computer programming languages, regardless of whether they are interpreted or compiled at the receiver's side.

It is therefore an object of the present invention to provide a way of distributing programming language code that avoids the problems mentioned above wholly or at least in part. A particular object of preferred embodiments of the invention is to establish a technical framework that allows the integrity of the programming language code to be verified. Another particular object of preferred embodiments of the invention is to establish a technical framework for embedding confidential information into the programming language code.

The present invention comprises a method having the features of claim 1, a code package having the features of claim 9, a computer program product having the features of claim 11 and a computer system having the features of claim 12. The dependent claims define preferred embodiments of the invention.

The present invention offers, for example, a software vendor the possibility to embed encoded information such as version numbers, information about the purchaser, vendor information and so on in a code package. The code package is sent to a client system. When the encoded information is received by either the vendor or another entity (e.g., a service technician), the encoded information is decoded and can be used for a variety of purposes. For example, the vendor or the service technician can check the version number and decide whether or not some update or some service pack is needed.

According to the present invention, the additional information is related to the programming language code. This wording is to be construed in its broadest possible meaning and shall comprise all kinds of additional information that is related to the programming language code in any technical or commercial or administrative or security-related aspect. For example, the additional information may identify technical features of the programming language code like a file name or a version number, or the additional information may concern commercial issues like the identity of the vendor or the customer of the software package. These and other useful data items may be contained directly in the additional information. The additional information may also serve as a reference or identifier for accessing the useful data in a database. It is also possible that the additional information contains some data items directly and further contains an identifier for accessing other, more critical data items in the database.

The present invention comprises a step of encoding the additional information and a step of decoding the encoded additional information. The result of the decoding step does not necessarily have to be identical to the original additional information. Instead, the decoding operation may just reverse the encoding operation partially. In preferred embodiments, for example, the encoding operation may comprise a formatting and an encryption step, while the decoding operation only comprises the corresponding decryption step. The decoded additional information may thus be a formatted or otherwise changed version of the original additional information.

In preferred embodiments of the invention, the programming language code is a human-readable code or text of a scripting language. However, embodiments are also contemplated in which the programming language code is a source code written in any (interpreted or compiled) programming language.

It is preferred, but not necessarily required, that the initial steps of the inventive method up to the sending of the code package are all performed or at least controlled by the server system. In further preferred embodiments, the server system will also receive and decode the encoded additional information. This recipient, however, may also be another entity in some embodiments of the invention. A third party certification server or even a service technician using a laptop computer may receive and decode the additional information instead of the server system.

According to preferred embodiments of the invention, the additional information is not only transmitted to the client system, but this information (or information based thereon) is also stored in a database associated with the server system. It is then possible to verify the integrity of additional information by comparing the information stored in the database with the decoded information that has been received back from the client system. This integrity check is important to verify that the code package has not been tampered with during data transmission or at the client system. For example, it would be detected if a new version of the programming language code package had been illegally copied onto the client system.

Preferred embodiments of the invention further provide a way of verifying the integrity of the code package at the side of the client system such that, for example, a customer may check the integrity of the code package (or at least of the programming language code) received from a vendor. It is preferred to use an integrity signature for this purpose. Generally, an integrity signature is prepared by a signature algorithm that generates some kind of tamper-proof checksum (e.g., a checksum encrypted with a private key of the vendor) for the data covered by the integrity signature.

The integrity signature is preferably created by the server system (possibly using an external tool) when the code package is prepared for distribution. The integrity signature may cover (i.e., protect) only the programming language code, or it may cover both the programming language code and other information like, for example, the encoded additional information. The received integrity signature may be checked by the client system or by another system like, for example, a third party certification unit. This checking may be initiated automatically upon receipt of the code package or when another predefined condition is met or manually at any time.

The additional information may be encoded in a variety of ways. Any kind of structuring, formatting and representing of the information is considered as an encoding in this sense. For example, the additional information may be structured as a fragment in a page description or markup language like XML (extensible markup language). It may be useful in some embodiments if the encoded information is still human-readable such that, for example, the customer will be able to identify a file version number. In other embodiments, the additional information is encrypted as part of the encoding process. This encryption can be used to embed confidential information in the code package like, for example, the names of programmers or pricing information. It is also contemplated that some parts of the encoded additional information may still be human-readable while other, more sensitive parts may be encrypted.

According to further preferred embodiments of the invention, the encoded additional information and/or the integrity signature are/is included in the code package in the form of a comment or several comments. In the terminology of the present document, a comment is to be understood as any kind of data that will not be used in program execution and/or program script interpretation. Thus the inclusion of comments in the code package neither affects the syntactic correctness nor the execution of the program code. The way in which comments are designated depends on the specific programming language used. In the example of the scripting language PHP, the prepended tag "<?/*" and the appended tag "*/?>" serve for designating a comment.

It is further preferred to use a data communication network like, for example, the Internet for all communications between the server system and the client system. The security-related features of the present invention make it possible to use the Internet for program distribution in spite of the generally acknowledged lack of security of "standard" Internet communication.

The code package, the computer program product and the computer system of the present invention preferably also comprise one, several or all of the features that have been described above and/or have been mentioned in the dependent method claims. It should be noted that the computer system of the present invention may, in alternative embodiments, either comprise the server system and the client system or the server system only. Likewise, the computer program product may be a program that is only executed by the server system, or may be a set of programs that are intended for the server and the client systems, respectively.

Further features, objects and advantages of the present invention will be apparent from the following detailed description of sample embodiments. Reference is made to the drawings, in which:
Fig. 1 shows a schematic block diagram of a networked computer system implementing a sample embodiment of the present invention,
Fig. 2 shows a code package used in the sample embodiment of Fig. 1,
Fig. 3 shows an overview of several processing steps performed in the sample embodiment of Fig. 1 when distributing programming language code,
Fig. 4 is a schematic flow diagram showing an example of the processing of additional information and an integrity signature by the server system,
Fig. 5 further illustrates the processing of the elements of the code package of Fig. 2 by the server system of Fig. 1 when the method of Fig. 4 is executed,
Fig. 6 is a schematic flow diagram showing an example of the integrity verification process performed by the client system, and
Fig. 7 is a schematic flow diagram showing an example of the integrity verification process performed by the server system.

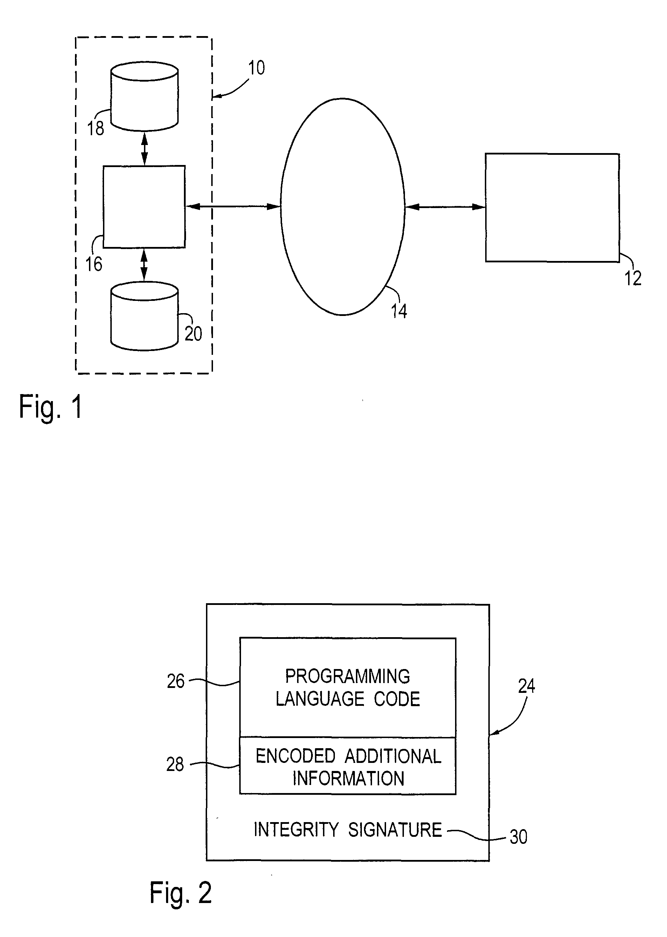

The computer system shown in the sample embodiment of Fig. 1 comprises a server system 10 communicating with a client system 12 via a data communication network 14. The data communication network 14 is the Internet in the present sample embodiment, but it may also be an Intranet or another wide area network. The server system 10 is a powerful computer or a computer cluster or a computer network. A single server processing unit 16 is shown as part of the server system 10 in Fig. 1, but it is apparent that a plurality of further server processing units could be present in alternative embodiments.

The server system 10 further comprises a code repository 18 for storing programming language code and a database 20 for storing additional data related to the programming language code. In connection with the present sample embodiment, the code repository 18 is an external software version control system like, for example, the Concurrent Versions System CVS. This system and other similar systems are well known in the art. In a particularly simple implementation, the standard file system of the server's operating system could be used for the code repository 18. The database 20 is implemented by one of the generally available database management systems like, for example, the system known under the trademark MySQL.

The client system 12 shown in Fig. 1 is in turn a powerful Internet server or a cluster of servers running databases and interpreters for scripting languages like Perl or PHP. Such a server or server cluster will nevertheless be termed "client system 12" in the present document since it is a client with respect to receiving scripting language code (more generally, programming language code) from the server system 10. In other sample embodiments of the invention, the client system 12 is a personal computer running an Internet browser that comprises scripting language interpreters for scripting languages like VBScript or JavaScript.

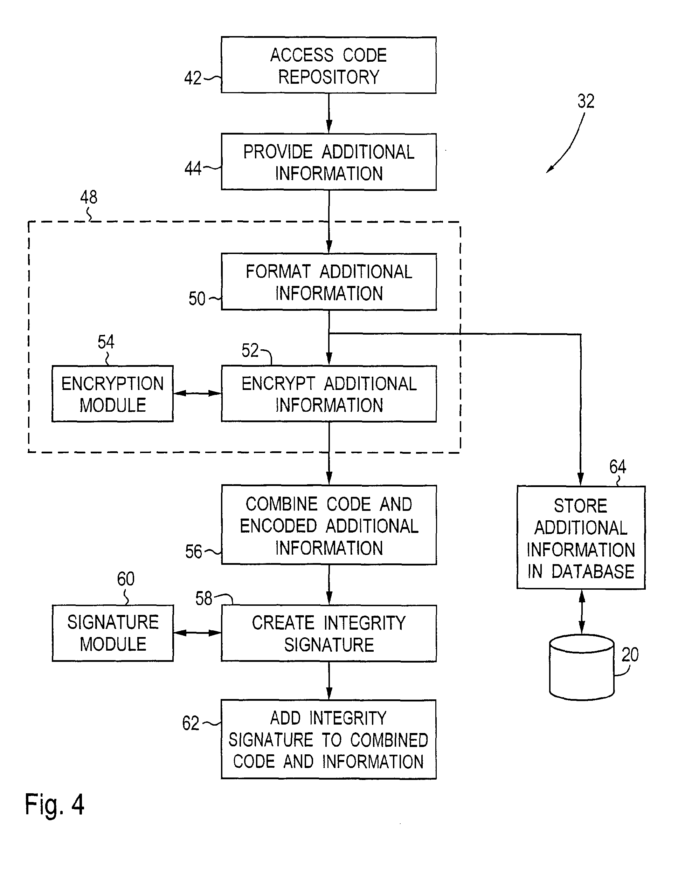

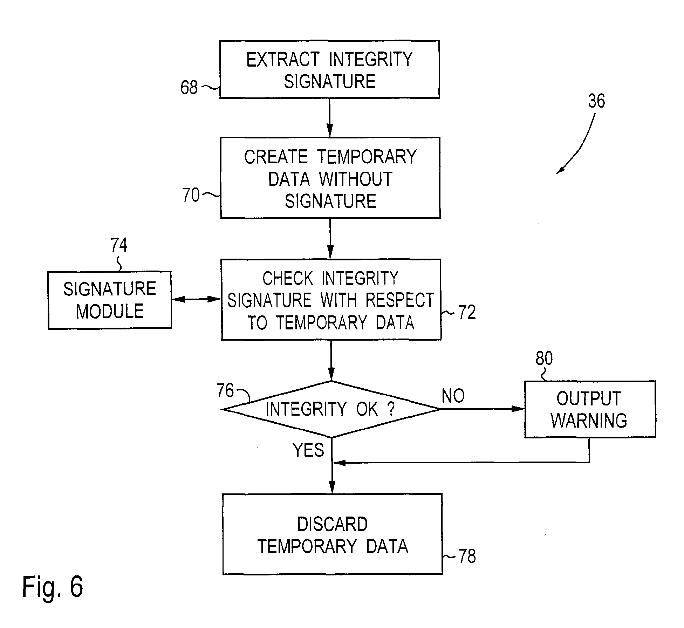

An example of a code package 24 is shown in Fig. 2. The code package 24 comprises a portion containing programming language code 26 and a portion containing encoded additional information 28. An integrity signature 30 covers both the programming language code 26 and the encoded additional information 28 and provides a way of validating that neither portion has been modified. A more detailed description of the items shown in Fig. 2 will be given below in connection with Fig. 4 and Fig. 5.

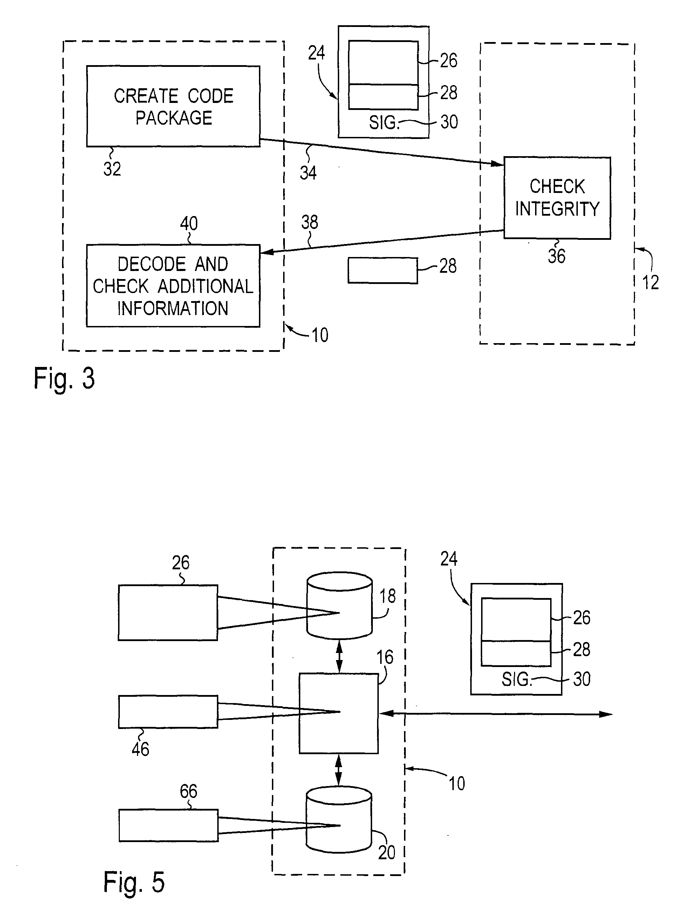

A coarse overview of the method of the present sample embodiment is given in Fig. 3. The code package 24 is created in a code package preparation process 32, which is performed by the server system 10. This process 32 will be further explained in Fig. 4 below. The finished code package 24 is then transmitted in transmission step 34 from the server system 10 to the client system 12 via the data communication network 14. The client 12 receives the code package 24. A check may be initiated automatically or manually whether or not the code package 24 has been modified during transmission (integrity check 36). This integrity check 36 is the subject of Fig. 6, which will also be described in more detail below.

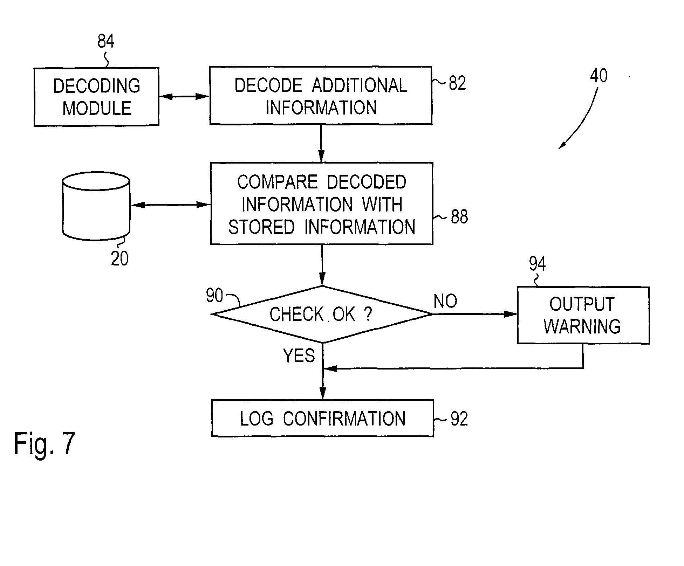

If the client system 12 confirms the integrity of the received code package 24, the encoded additional information 28 is extracted from the code package 24 and is transmitted back to the server system 10 (transmission step 38). In a further verification process 40, the server system 10 decodes the additional information and checks it by comparing it with the corresponding entry in the database 20. A more detailed description of the verification process 40 will be given below in connection with Fig. 7.

The flow diagram of Fig. 4 shows the code package preparation process 32 of the present sample embodiment in more detail. This process is iteratively repeated for all programming language code files that are to be transmitted to the client system 12. However, for the sake of simplicity, only a single iteration of the code package preparation process 32 is shown in Fig. 4.

The process 32 starts in step 42 with the server system 10 (more accurately, the server processing unit 16) accessing the code repository 18 for obtaining the programming language code 26. Suitable parameters are passed to the code repository 18 to ensure that the "correct" (usually, the most recent) version of the programming language code 26 is obtained. Additional information related to the programming language code 26 is provided in step 44. In the presently described sample embodiment, the following additional information items are gathered by the server processing unit 16 from the code repository 18, the database 20 and possibly further databases: identifier of the code package 24, signature version, file name, file version, file release, and vendor identifier. This additional information created in step 44 is schematically depicted with reference number 46 in Fig. 5.

Returning to Fig. 4, the next step 48 of encoding the additional information 46 comprises two sub-steps. In the first sub-step 50, the additional information 46 is formatted as a fragment written in the page description language XML (extensible markup language). The formatted additional information is then encrypted in sub-step 52 to ensure the confidentiality of this information. An external encryption module 54 is used for the encryption sub-step 52. For example, one of the encryption programs PGP (Pretty Good Privacy) and GPG may be used. All in all, the additional information 46 is formatted and encrypted in the encoding step 48.

The encoded additional information 28 is then combined with the programming language code 26 in step 56. In the present sample embodiment, this combining is performed by appending the encoded additional information 28 as a comment to the programming language code 26. More in detail, a tag that marks the beginning of a comment (here: "<?/*") is appended to the programming language code 26, and the encoded additional information 28 is in turn appended thereto. The corresponding tag marking the end of the comment will be appended later.

In the subsequent step 58, an integrity signature 30 is created for the combined programming language code and additional information data obtained so far. An external signature module 60 is used for this task. The external signature module 60 is again provided by PGP or GPG in the present sample embodiment. In step 62, the integrity signature 30 is appended to the data obtained so far. Finally the appropriate end-of-comment tag (here: "*/?>") is appended, thus yielding the complete code package 24. In alternative embodiments, the integrity signature 30 is created on the basis of the programming language code 26 only. This alternative also offers sufficient security since the encoded additional information 28 is already protected by encryption against any unauthorized modification.

A further step 64 concerns the storage of information based on the additional information 46 in the database 20. This stored information is schematically depicted with reference number 66 in Fig. 5. The stored information 66 will be used in the subsequent verification process 40 for verifying the integrity of the information in the code package 24. In the present sample embodiment, the stored information 66 is identical to the formatted additional information produced as the result of the formatting sub-step 50, and consequently step 64 can be performed in parallel to sub-step 52 and steps 56, 58 and 62. In alternative embodiments, the original additional information 46 or any other information derived therefrom may be stored in the database 20. It is apparent that the verification process 40 and the choice of information that is stored in the database 20 in step 64 must be adapted to one another.

This completes the process 32 of creating the code package 24. The finished code package 24 is now transmitted to the client in step 34.

Fig. 6 depicts the integrity check 36 performed by the client system 12. Again, the process of Fig. 6 is iteratively repeated for all code packages 24 received, but only a single iteration is shown for the sake of clarity. In different embodiments of the invention, the integrity check process 36 may either be initiated automatically after receipt of the code package 24 or when another predefined condition is met, or it may be initiated manually at any time to verify that the code package 24 is still intact. This function is especially useful when requesting support from a software vendor.

The integrity check 36 begins with a step 68 of extracting the integrity signature 30 from the received code package 24. Temporary data that reflects the programming language code 26 and the encoded additional information 28 (i.e., the contents of the code package 24 without the integrity signature 30) is created in step 70. The temporary data generally contains those portions of the code package 24 that are covered by the integrity signature. For example, in the alternative embodiments mentioned above that use the integrity signature for protecting the programming language code 26 only, the temporary data will also contain only this code.

The client system 12 then, in step 72, checks the integrity signature with respect to the temporary data. The same signature algorithm that has been used by the server system 10 in step 58 is also employed in step 72, and again an external signature module 74 (PGP or GPG) is used. For example, the original integrity signature may comprise a checksum encrypted by the private key of the publisher of the data. Then the process of checking the integrity signature will comprise the steps of decrypting the integrity signature using the public key of the data publisher, calculating the checksum of the temporary data, and comparing the decrypted checksum and the calculated checksum. Other algorithms for integrity checking are possible and are well-known in the art.

The result of the integrity checking step 72 is evaluated in test 76. The temporary data will be discarded (step 78) if the integrity of the code package 26 received by the client system 12 is established. A failure of the integrity check indicates that the code package 24 has been modified in some way, and an appropriate warning is issued in step 80 before going to step 78. This completes the integrity check process 36.

Returning shortly to Fig. 3, the integrity check 40 at the side of the server system 10 is initiated when the server system 10 receives, from the client system 12, the encoded additional information 28 that has originally been sent to the client system 12 as part of a code package 24. In the present sample embodiment, the HTTP protocol over TCP/IP is used for this (and all other) data transmission steps via the data communication network 14. Of course the transmission step 38 presupposes that the client system 12 has extracted the encoded additional information 38 from the code package 24.

Fig. 7 shows the server side verification process 40 in more detail. The encoded additional information 28 is decoded by the server system 10 in step 82 using an external decoding module 84. In the present sample embodiment, the decoding step 82 is a decryption step that reverses the encryption sub-step 52 but not the formatting sub-step 50. Correspondingly, the decoding module 84 is a decryption module, namely PGP or GPG again. This means that the result of the decoding step 82 will be the formatted version of the original additional information 46, if no unauthorized alterations have been made. In step 64, this formatted version has also been stored in the database 20 as the stored information 66. As mentioned above, if another version of the additional information 46 (e.g., an unformatted version) is stored in step 64, the decoding step 82 must be adapted accordingly.

The database 20 is accessed in step 88 for obtaining the stored information 66, and the stored information 66 and the decoded information are compared. If the information items coincide ("yes" branch of test 90), then the validity check has succeeded, and a corresponding confirmation is logged in step 92. If any differences are found ("no" branch of test 90), then appropriate warnings are output in step 94 and logged in step 92. This completes the server side verification procedure.

The present invention, and in particular the sample embodiment described above, may be used as a base for a variety of proposes such as, for example:
- verifying the integrity of a code package or of programming language code for support inquiries, and/or
- embedding version information in a code package or in programming language code, and/or
- allowing automatic upgrades and downgrades in a client/server environment, and/or
- identifying all code packages a specific client system has received, and/or
- identifying the vendor on the basis of a installation at the client system.

## Claims

1. A method for distributing programming language code (26), said method comprising the steps of:
- accessing (42) the programming language code (26) in a code repository (18),
- providing (44) additional information (46) related to said programming language code (26),
- encoding (48) said additional information (46),
- combining (56) said programming language code (26) and the encoded additional information (28),
- sending (34) said combined programming language code and encoded additional information (26, 28) from a server system (10) to a client system (12),
- receiving (38) said encoded additional information (28) from said client system (12), and
- decoding (82) said encoded additional information (28) received from said client system (12).

2. The method of claim 1,
comprising the further steps of:
- storing (64) information (66) based on said additional information (46) in a database (20) associated with said server system (10), and
- after decoding (82) said encoded additional information (28), comparing (88) the decoded additional information with the stored information (66) in said database (20).

3. The method of claim 1 or claim 2,
comprising the further steps of:
- creating (58) an integrity signature (30) covering at least said programming language code (26),
- sending (34) said integrity signature (30) with said combined programming language code and encoded additional information (26, 28) from said server system (10) to said client system (12), and
- verifying (36) the integrity of at least said programming language code (26) by said client system (12) by checking said integrity signature (30).

4. The method of claim 3,
wherein said step of sending (34) said integrity signature (30) with said combined programming language code and encoded additional information (26, 28) comprises the step of adding (62) said integrity signature (30) to said combined programming language code and encoded additional information (26, 28) as at least one comment.

5. The method of one of claims 1 to 4,
wherein said additional information (46) comprises database reference information and/or package identifier information and/or signature version information and/or file name information and/or file version information and/or file release information and/or information related to the purchaser of said programming language code (26) and/or information related to the vendor of said programming language code (26).

6. The method of one of claims 1 to 5,
wherein said step of encoding (48) said additional information (46) comprises an encryption step (52), and wherein said step of decoding (82) the received encoded additional information (28) comprises a decryption step.

7. The method of one of claims 1 to 6,
wherein said step of encoding (48) said additional information (46) comprises a step of formatting (50) said additional information (46) using a markup language.

8. The method of one of steps 1 to 7,
wherein said step of combining (56) said programming language code and said encoded additional information (26, 28) comprises the step of adding said encoded additional information (28) to said programming language code (26) as at least one comment.

9. A code package (24) used for distributing programming language code (26), said code package (24) comprising:
- programming language code (26),
- encoded additional information (28) related to said programming language code (26),
- an integrity signature (30) covering at least said programming language code (26).

10. The code package (24) of claim 9,
wherein said encoded additional information (28) is encrypted and is added to said programming language code (26) as at least one comment.

11. A computer program product for execution by at least one server processing unit (16) for distributing programming language code (26), said computer program product including instructions for making said at least one server processing unit (16) perform the steps of the method of one of claims 1 to 8.

12. A computer system for distributing programming language code (26), said computer system comprising at least one server processing unit (16) programmed for performing a method according to one of claims 1 to 8.
